# EUROPÄISCHE PATENTSCHRIFT

(11) **EP 0 946 669 B1**
(45) Veröffentlichungstag und Bekanntmachung des Hinweises auf die Patenterteilung: **04.09.2002**
(21) Anmeldenummer: 97951873.5
(22) Anmeldetag: 10.11.1997
(51) Int. Cl.: C09K 7/06, C09K 7/02, C10M 105/00

(54) **MEHRPHASIGE SCHMIERMITTELKONZENTRATE FÜR DEN EINSATZ IN WASSERBASIERTEN SYSTEMEN AUS DEM BEREICH DER ERDREICHERBOHRUNG**
MULTIPHASE LUBRICANT CONCENTRATES FOR USE IN WATER BASED SYSTEMS IN THE FIELD OF EXPLORATORY SOIL DRILLING
LUBRIFIANTS CONCENTRES A PHASES MULTIPLES S'UTILISANT DANS DES SYSTEMES A BASE D'EAU PROVENANT DU DOMAINE DE L'EXPLORATION DE SOUS-SOLS

(30) Priorität: 18.11.1996 DE 19647565
(43) Veröffentlichungstag der Anmeldung: 06.10.1999
(73) Patentinhaber: Cognis Deutschland GmbH & Co. KG, 40589 Düsseldorf (DE)
(72) Erfinder: HEROLD, Claus-Peter, D-40822 Mettmann (DE); MÜLLER, Heinz, D-40789 Monheim (DE); FÖRSTER, Thomas, D-40699 Erkrath (DE); VON TAPAVICZA, Stephan, D-40699 Erkrath (DE); CLAAS, Marcus, D-40723 Hilden (DE)
(86) Internationale Anmeldenummer: EP9706231
(87) Internationale Veröffentlichungsnummer: WO98022552

(56) Entgegenhaltungen:
- EP-A- 0 117 970
- EP-A- 0 213 321
- EP-A- 0 391 252
- EP-A- 0 398 112
- DE-A- 3 819 193

## Beschreibung

Die Erfindung betrifft eine neue, in mehrfacher Hinsicht verbesserte Angebotsform für Schmiermittel und Schmiermittelsysteme, die im Rahmen der Erdreicherbohrung entsprechenden wasserbasierten Bohrspülflüssigkeiten und/oder anderen wasserbasierten Arbeitsflüssigkeiten aus diesem Einsatzgebiet zugesetzt werden. Nachfolgend wird die Erfindung anhand solcher rein wäßrigen Bohrspülflüssigkeiten und darauf aufgebauter Bohrspülschlämme beschrieben. Das Anwendungsgebiet der erfindungsgemäß ausgestalteten Hilfsflüssigkeiten ist jedoch nicht darauf eingeschränkt. In Betracht kommen insbesondere auch entsprechende Hilfsflüssigkeiten für Probleme aus dem Bereich des differential stikking, insbesondere spotting fluids, für das work over, die Stimulierung und vergleichbare Einsatzgebiete in solchen Erdbohrungen.

Die einschlägige Technologie des geologischen Aufschlusses von beispielsweise Erdölund/oder Erdgasvorkommen unterscheidet drei Grundtypen der hier in der Praxis zum Einsatz kommenden Hilfsflüssigkeiten, insbesondere entsprechender Bohrschlämme: Ölbasierte Systeme, die in der Regel eine geschlossene Ölphase in Abmischung mit einer dispersen Wasserphase im Sinne der sogenannten W/O-Invert-Spülungen aufweisen, wasserbasierte Öl/Wasser-Systeme, in denen die wäßrige Phase mit ihren gelösten und dispergierten Hilfsstoffen die geschlossene Phase bildet und die Ölphase darin fein emulgiert verteilt ist, sowie schließlich die Klasse der rein wasserbasierten Bohrspülungen. Der hier zuletzt genannten Klasse von Bohrspülungen sind insbesondere die in jüngster Zeit wieder aufgegriffenen Vorschläge zuzuordnen, rein wasserbasierte Systeme auf Basis löslicher Alkalisilikate zu verwenden, die auch als Wassergläser bzw. Wasserglas-basierte Systeme bekannt sind.

Der Mitverwendung von Komponenten mit ausgesprochener Schmierwirkung in Bohrspülschlämmen kann wichtige Bedeutung zukommen. So kann damit der Bohrfortschritt substantiell beschleunigt und damit die zur Erbohrung vorgegebener Tiefen benötigte Zeit abgekürzt werden, das Auftreten von Störungen - beispielsweise aus dem Bereich des differential sticking - wird verhindert oder wenigstens zurückgedrängt. Auf das allgemeine Fachwissen wird verwiesen, s. hierzu beispielsweise das Fachbuch George R. Gray und H.C.H. Darley "Composition in Properties of Oil Well Drilling Fluids", 4. Auflage, 1980/81, Gulf Publishing Company, Houston und die umfangreiche darin zitierte Sach- und Patentliteratur sowie das Handbuch "Applied Drilling Engineering", Adam T. Borgoyne, Jr. et al., First Printing Society of Petroleum Engineers, Richardson, Texas (USA).

Besonders wichtig kann der Einsatz von Hilfskomponenten mit Schmiermittelwirkung im Bereich der wasserbasierten Arbeitsflüssigkeiten, insbesondere entsprechender wasserbasierter Bohrspülschlämme sein. Hier stellt sich als (Teil)-Aufgabe unter anderem das folgende spezifische Problem: Im wäßrigen System nicht lösliche Hilfskomponenten mit ausgesprochener Schmierwirkung - üblicherweise entsprechende Komponenten organischen Ursprungs - sollten möglichst feinst verteilt und dabei homogen im Spülsystem verteilt sein. Insbesondere gilt das auch schon für die Arbeitsstufe ihrer primären Einmischung in den Bohrschlamm im Rahmen der absatzweisen oder kontinuierlichen Aufstockung der Bohrschlammenge, die in zunehmendem Ausmaß durch den Bohrfortschritt und das damit größer werdende und mit dem Bohrschlamm auszufüllende Hohlraumvolumen benötigt wird.

Die Erfindung geht insbesondere von der Aufgabenstellung aus, hier eine neue Angebotsform zur Verfügung zu stellen, in der Schmiermittel bzw. Schmiermittelsysteme auf organischer Basis lagerstabil feinstdispers in einer geschlossenen wäßrigen Phase angeboten werden können. Die Einmischung solcher Schmiermittelsysteme in wasserbasierte Hilfsflüssigkeiten beispielsweise von der Art entsprechender Bohrspülschlämme und die sofortige feinstteilige Homogenisierung der organischen Phase in dem wasserbasierten System werden damit möglich. Verbunden ist damit aber auch eine Wirkungssteigerung wenigstens in der Frühphase des Einsatzes der organisch-basierten Schmiermittel.

### Gegenstand der Erfindung

Erfindungsgegenstand sind dementsprechend in einer ersten Ausführungsform mehrphasige Schmiermittelkonzentrate mit verbesserten Eigenschaften für den Einsatz in wäßrigen Arbeitsflüssigkeiten aus dem Bereich des Erdreichaufschlusses durch Erbohrung, enthaltend bei Raumtemperatur flüssige und/oder feste organische Komponenten mit Schmiermittelwirkung (O-Phase) zusammen mit Emulgatoren fein-dispers verteilt in einer geschlossenen wäßrigen Phase (W-Phase), wobei bei diesen mehrphasigen Schmiermittelkonzentraten das System aus O-Phase/W-Phase und Emulgatoren eine Phaseninversionstemperatur (PIT) oberhalb der Raumtemperatur aufweist und durch Erhitzen des

Mehrphasensystems auf Temperaturen gleich/oberhalb PIT und nachfolgendes Abkühlen auf Werte kleiner PIT hergestellt worden ist und die Mittel, dadurch gekennzeichnet sind, daß sie Additive fiir den Anwendungsbereich extremen Drucks, E-P-Additive, enthalten.

Zweckmäßigerweise liegt die Untergrenze der PIT des Mehrphasensystems bei Temperaturen von wenigstens 25 bis 30°C, vorzugsweise jedoch bei höheren Grenzwerten, beispielsweise bei Werten gleich/größer 40 bis 50°C.

Die Erfindung betrifft in einer weiteren Ausfuhrungsform die Verwendung solcher mehrphasigen Schmiermittelkonzentrate als Zusatz zu wasserbasierten Arbeitsflüssigkeiten aus dem Bereich des Erdreichaufschlusses durch Erbohrung und der weiterführenden Behandlung solcher Erdreichbohrungen. In einer wichtigen Ausführungsform werden solche mehrphasigen Schmiermittelkonzentrate reinen wasserbasierten Bohrspülungen und/oder Emulsions-Bohrspülungen vom O/W-Typ zugesetzt. Es ist dabei aber auch möglich, daß die mehrphasigen Schmiermittelkonzentrate Arbeitsflüssigkeiten zugesetzt werden, deren Arbeitstemperatur vor Ort im Erdreichinneren oberhalb der PIT des Mehrphasensystems liegt.

### Einzelheiten zur erfindungsgemäßen Lehre

Zum Verständnis der dargestellten Arbeitsprinzipien der Erfindung wird nachfolgend das einschlägige Wissen der Fachwelt kurz referiert:

Es ist bekannt, daß Öl-in-Wasser-Emulsionen bei Einsatz ausgewählter, insbesondere wenigstens anteilig nichtionischer Emulgatoren bzw. Emulgatorsysteme beim Erwärmen eine Phaseninversion erleiden, d.h., daß bei höheren Temperaturen die äußere, wäßrige Phase zur inneren Phase werden kann. Umfangreiche druckschriftliche Literatur setzt sich mit diesem naturwissenschaftlichen Phänomen der Phaseninversion, der Beschaffenheit und der Anpassung ausgewählter Emulgatoren für die Ausbildung dieser Fähigkeit zur Phaseninversion und mit potentiellen praktischen Einsatzgebieten zur Ausnutzung dieses speziellen Effektes auseinander. Bedeutungsvoll ist diese Technologie bisher insbesondere im Zusammenhang mit der Herstellung von kosmetischen Formulierungen. Verwiesen wird beispielsweise auf die Offenbarung der EP 0 354 586 und EP 0 521 981. Beschrieben sind hier die Herstellung stabiler, niedrig viskoser Öl-in-Wasser-Emulsionen polarer Ölkomponenten bzw. die Herstellung von Öl-in-Wasser-Cremes.

Gegenstand der älteren Anmeldung der Anmelderin gem. DE 196 43 840 ist die Anwendung des hier angesprochenen naturwissenschaftlichen Prinzips der Phaseninversion in mehrphasigen Abmischungen von Wasser und Öl auf das Gebiet wasserbasierter Arbeitsflüssigkeiten zum Erdreichaufschluß durch Erbohrung und/oder zur weiterführenden Behandlung solcher Erdreichbohrungen. Die Offenbarung dieser älteren Anmeldung setzt sich ausführlich mit den naturwissenschaftlichen und technischen Gegebenheiten bzw. ihrer Berücksichtigung im Rahmen der Anwendung des an sich bekannten Prinzips der Phaseninversion bzw. des zugehörigen Bereichs zur Phaseninversionstemperatur (PIT) auseinander. Die Offenbarung dieser älteren Anmeldung wird hiermit ausdrücklich auch zum Gegenstand der vorliegenden Erfindungsoffenbarung gemacht, so daß im nachfolgenden nur noch eine verkürzte Fassung wesentlicher Elemente des bekannten Fachwissens gebracht wird, das im Rahmen der jetzt gegebenen erfindungsgemäßen Lehre zu berücksichtigen ist.

Die Ausbildung des jeweils konkreten Temperaturbereiches für die Phaseninversion (PIT bzw. Mittelphase) im Rahmen der temperaturabhängigen Ausbildung des jeweils stabilen Systems im Phasengleichgewicht O/W-Mittelphase-W/O wird durch eine Mehrzahl von konkreten Parametern beeinflußt: Chemische Natur der Ölphase; Beschaffenheit der Emulgatoren/Emulgatorsysteme; Beladung der wäßrigen Phase. Die Bestimmung des Bereiches der Phaseninversion im jeweiligen Mehrkomponentensystem ist auf experimentellem Wege möglich durch Messung der elektrischen Leitfähigkeit in Abhängigkeit von der Temperatur des Mehrkomponentensystems. Die geschlossene Wasserphase im O/W-System stellt eine hohe elektrischen Leitfähigkeit sicher. Die geschlossene Ölphase im W/O-Zustand läßt die elektrische Leitfähigkeit praktisch auf Null absinken. Der Temperaturbereich zwischen diesen beiden Grenzbereichen ist charakteristisch fiir die Mittelphase der Inversion.

Die jüngere Literatur zeigt zusätzlich den Weg auf, Aussagen zum Temperaturbereich der Phaseninversion auf rechnerischem Wege zu ermitteln. Verwiesen wird in diesem Sachzusammenhang insbesondere auf die Veröffentlichung TH.FÖRSTER, W.VON RYBINSKI, H.TESMANN und A.WADLE "Calculation of optimum emulsifier mixtures for phase inversion emulsification", in International Journal of Cosmetic Science 16, 84-92 (1994). Dargestellt ist hier, wie sich auf rechnerischem Weg für vorgegebene 3-Komponenten-Systeme aus einer Ölphase, einer Wasserphase und einem Emulgator auf der Basis des für die Ölphase charakteristischen EACN-Wertes (equivalent alkane carbon number) der Temperaturbereich der Phaseninversion (PIT) über die CAPICO-Methode (calculation of phase inversion in concentrates) errechnen läßt. Diese Veröffentlichung FÖRSTER et al. bezieht insbesondere wiederum wesentliche Literatur fiir den hier angeschnittenen Themenkomplex an, vgl. die Referenz-Liste a.a.O. Seiten 91 und 92, die im Zusammenhang mit der Offenbarung dieser Veröffentlichung FÖRSTER et al. zu sehen ist. Im einzelnen wird dann anhand zahlreicher Beispiele dargestellt, wie mittels der CAPICO-Methode im Rahmen des EACN-Konzepts die Auswahl und Optimierung der Emulgatoren/Emulgatorsysteme zur Einstellung vorgegebener Werte für den Temperaturbereich der Phaseninversion zugänglich wird.

### Die zitierte Literatur stellt darüberhinausgehend den folgenden wichtigen Sachverhalt klar:

Durch Einsatz des Arbeitsmittels des Erhitzens der mehrphasigen Wertstoffinischungen auf Temperaturen im Bereich der Phaseninversion (PIT) und/oder darüber mit nachfolgendem Abkühlen der erhitzten Wertstoffmischung auf Temperaturen unterhalb PIT führt zu wasserbasierten O/W-Emulsionen bzw. -Dispersionen mit extrem feinteiliger O-Phase. Die Feinteiligkeit solcher Emulsionen kann soweit gehen, daß ihre Teilchen nicht mehr optisch sichtbar sind, die Emulsionen vielmehr ein transparentes, opaleszierendes Aussehen haben. Dieser Zustand kann auch für längere Lagerzeiträume durch hinreichendes Absenken der Guttemperatur unter den Bereich der Phaseninversion sichergestellt werden. Die erfindungsgemäße Lehre macht in bevorzugten konkreten Ausführungsformen hiervon Gebrauch.

Dementsprechend zeichnen sich erfindungsgemäß bevorzugte Schmiermittelkonzentrate der angegebenen Art dadurch aus, daß die Untergrenze der PIT des Mehrphasensystems bei Temperaturen oberhalb 25 bis 30°C und vorzugsweise bei Temperaturen gleich/größer 40 bis 50°C liegt. Der Einsatz solcher Emulgatoren/Emulgatorsysteme im jeweiligen System kann besonders zweckmäßig sein, der nochmals höhere Untergrenzen für die PIT des Mehrphasensystems sicherstellt, beispielsweise also untere Grenzwerte von 60 bis 70°C oder auch noch darüber. Es leuchtet ein: Für eine Lagerung des im erfindungsgemäßen Sinne aufbereiteten Mehrkomponentensystems mit extrem feinteiliger disperser Ölphase bei Raumtemperatur oder nur schwach erhöhten Temperaturen kann ein hinreichender Abstand zur Untergrenze der PIT wichtig sein, um die dauerhafte Feinstdispergierung der Ölphase zu gewährleisten. Hier können Temperaturintervalle von wenigstens 20 bis 40°C zwischen der Lagertemperatur und der Untergrenze der PIT die gewünschte Stabilität sicherstellen.

Dem hier angesprochenen Gesichtspunkt kommt dann geringere Bedeutung zu, wenn die disperse Ölphase bei der Lagerung zum Feststoff erstarrt ist, so daß eine Rekombination im Bereich der Lagertemperatur von vorneherein ausscheidet, vgl. Einzelheiten hierzu im nachfolgenden.

Es ist weiterhin im Rahmen der Erfindung bevorzugt, daß die Obergrenze der Phaseninversionstemperatur des Mehrphasensystems bei höchstens etwa 100°C oder nur unwesentlich darüber - maximal bei 110 bis 120°C - liegt. Bevorzugt kann es hier sein, daß die Obergrenze der PIT im Bereich von 80 bis 95°C und insbesondere bis maximal 90°C liegt. Sichergestellt ist auf diese Weise, daß bei der Ausbildung der Mikroemulsionsphase durch Einstellung des Temperaturbereiches der PIT keine zusätzlichen technischen Schwierigkeiten ausgelöst werden.

Die erfindungsgemäß als Schmiermittel bzw. Schmiermittelkomponenten eingesetzten Bestandteile können bei Raumtemperatur flüssig und/oder fest sein. Im praktischen Einsatz beispielsweise im wasserbasierten Bohrschlamm werden sie ja in das Innere des Erdreichs mit seinen erhöhten Arbeitstemperaturen eingeführt und erschmelzen bzw. erweichen hier in an sich bekannter Weise dann soweit, daß sie ihrer Funktion als Schmiermittel auch dann gerecht werden, wenn sie bei Raumtemperatur fest sind. Entscheidend ist fiir die erfindungsgemäße Lehre grundsätzlich aber der nachfolgende Vorteil: Die Einmischung frischer Anteile erfindungsgemäß zubereiteter mehrphasiger Schmiermittelkonzentrate in Bohrspülsysteme, insbesondere in wasserbasierte Bohrspülschlämme, führt zur problemlosen homogen Verteilung des Schmiermittelbestandteils in feinster Teilchenform in das Gesamtvolumen der Arbeitsflüssigkeit.

Sollen erfindungsgemäß organische Schmiermittelkomponenten zum Einsatz kommen, die bei Raumtemperatur oder nur leicht erhöhter Lagertemperatur als Feststoffe vorliegen, dann kann es bevorzugt sein, hier solche Komponenten auszuwählen, die zum wenigstens überwiegenden Anteil bei Temperaturen gleich/größer PIT und insbesondere bei den maximalen Arbeitstemperaturen zur nachfolgenden Auslösung der Phaseninversion durch Abkühlen im fließfähigen Zustand vorliegen. In der Regel sind also damit Schmiermittelkomponenten bevorzugt deren Schmelzpunkte maximal bei etwa 100°C, vorzugsweise aber darunter liegen.

Die Mengenverhältnisse von W-Phase/O-Phase für Schmiermittelkonzentrate im Sinne der erfindungsgemäßen Lehre können in weiten Bereichen gewählt werden. Geeignet ist grundsätzlich der breite Bereich von (W-Phase/O-Phase) 10/90 bis 90/10, vorzugsweise der Bereich von 25/75 bis 80/20. Besonders geeignete Mischungsverhältnisse können hier im Bereich von 35/65 bis 60/40 liegen, wobei sowohl dünnflüssige wie auch vergleichsweise schwerer bewegliche bis hin zu dickflüssigen Emulsionen bzw. Dispersionen in Betracht kommen, solange der O/W-Zustand gewährleistet ist. Durch einfaches Verdünnen mit Wasser bzw. wäßrigen Anteilen kann eine hinreichende Fließfähigkeit des Wertstoffkonzentrates jederzeit auch vor Ort sichergestellt werden.

Zur Auswahl geeigneter Emulgatoren/Emulgatorsysteme wird auf das hier betroffene spezielle Fachwissen der Bedeutung der Emulgatoren für das Phänomen der temperaturabhängigen Phaseninversion (PIT) sowie das allgemeine Fachwissen zu Emulgatoren in seiner Gesamtheit verwiesen. Wie schon zuvor angegeben sind insbesondere Emulgatoren/Emulgatorsysteme geeignet, die wenigstens anteilsweise, vorzugsweise zum wenigstens überwiegenden Anteil, nichtionischer Struktur sind und/oder sowohl nichtionische Strukturelemente als auch anionische Strukturelemente in der Molekülgrundstruktur miteinander verbinden. Dabei gilt weiterhin grundsätzlich, daß mehrkomponentige Emulgatorsysteme insbesondere zur erleichterten Anpassung der PIT an den im praktischen Einsatz vorgegebenen Temperaturbereich der Phaseninversion bevorzugt sind. Hier kann besondere Bedeutung insbesondere Abmischungen aus Emulgator-Hauptkomponenten mit vergleichsweise stärker ausgeprägter Hydrophilie und Co-Emulgatoren erhöhter Lipophilie zukommen. Emulgator-Hauptkomponenten mit HLB-(number)Werten des HLB-Bereiches von 6 bis 20 und vorzugsweise von 7 bis 18 sind bevorzugte Hilfsstoffe der hier angesprochenen Art. In einer weiterhin bevorzugten Ausführungsform kommen solche Emulgator-Hauptkomponenten zusammen mit stärker lipophilen Co-Emulgatoren zum Einsatz, die - bezogen auf die jeweilige(n) Emulgator-Hauptkomponente(n)- einen niedrigeren HLB-Wert aufweisen.

Zur chemischen Beschaffenheit nichtionischer Emulgatoren bzw. nichtionische Komponenten enthaltender Emulgatorsysteme kann auf das außergewöhnlich umfangreiche Fachbuchwissen und das sonstige druckschriftliche einschlägige Material verwiesen werden. Zitiert seien in diesem Zusammenhang K. SHINODA und H. KUNIEDA "Phase Properties of Emulsions: PIT and HLB" in "Encyclopedia of Emulsion Technology" 1983, Vol.1, 337 bis 367. Zum einschlägigen druckschriftlichen Material wird weiterhin verwiesen auf die Veröffentlichung Gordon L. Hollis, Surfactants Europa, Third Edition, The Royal Society of Chemistry, dort insbesondere Kapitel 4, Nonionics (Seiten 139 bis 317). Verwiesen wird weiterhin beispielsweise auf die nachfolgenden Veröffentlichungen, die in Buchform erschienen sind: M.J. Schick "NONIONIC SURFACTANTS", Marcel Dekker, INC, New York, 1967; H.W. Stache "ANIONIC SURFACTANTS", Marcel Dekker, INC, New York, Basel, Hongkong; Dr.N.Schönfeldt "Grenzflächenaktive Ethylenoxid-Addukte", Wissenschaftliche Verlagsgesellschaft mbH, Stuttgart 1976.

Aus diesem umfangreichen Wissen zu Emulgatoren beziehungsweise Emulgatorsystemen wenigstens anteilsweise nichtionischer Konstitution kann unter Einsatz des zuvor zitierten Fachwissens (SHINODA et al. sowie Th. Förster et al.) der Bereich der Phaseninversionstemperatur für vorgegebene Stoffgemische aus Ölphase, Emulgator und wäßriger Phase berechnet werden. Im nachfolgenden werden dementsprechend einige zusätzliche, erfindungsgemäß bevorzugte Bestimmungselemente für die Auswahl der Emulgatoren/Emulgatorsysteme gebracht. Besonders geeignete Emulgator-Hauptkomponenten und/oder Co-Emulgatoren lassen sich insbesondere wenigstens einer der nachfolgenden Stoffklassen zuordnen:
(Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Dabei bestimmt in bekannter Weise die Länge der Alkoxylatreste im Verhältnis zu den im Molekül vorliegenden lipophilen Resten das jeweils gegebene Mischungsverhältnis von hydrophilem und hydrophobem Verhalten und die damit verbundene Zuordnung der HLB-Werte. Alkoxylate der angegebenen Art sind bekanntlich als solche - d.h. mit endständiger freier Hydroxylgruppe am Alkoxylatrest - nichtionische Emulgatoren, die entsprechenden Verbindungen können aber auch Endgruppen-verschlossen sein, beispielsweise durch Veresterung und/oder Veretherung.

Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Die polyfunktionellen Alkohole mit 2 bis 6 OH-Gruppen im Grundmolekül beziehungsweise die sich davon ableitenden Oligomeren können dementsprechend insbesondere Diole und/oder Triole beziehungsweise deren Oligomerisierungsprodukte sein, wobei dem Glykol und dem Glycerin oder ihren Oligomeren besondere Bedeutung zukommen kann. Aber auch andere polyfunktionelle Alkohole der hier zusammenfassend genannten Art wie Trimethylolpropan, Pentaerythrit bis hin zu Glykosiden - beziehungsweise ihren jeweiligen Oligomeren - können Grundmoleküle für die Umsetzung mit lipophile Reste enthaltenden Säuren und/oder Alkoholen sein, die dann wichtige Emulgatorkomponenten im erfindungsgemäßen Sinne sind. Dem Bereich von Partialethern mehrfunktioneller Alkohole sind auch bekannte nichtionische Emulgatoren von der Art der Ethylenoxid/Propylenoxid/Butylenoxid-Blockpolymeren zuzuordnen. Ein weiteres Beispiel für entsprechende Emulgatorkomponenten sind Alkyl(poly)glykoside langkettiger Alkohole.

Ein besonders wichtiges Beispiel fiir Co-Emulgatoren sind Fettalkohole natürlichen und/oder synthetischen Ursprungs, andere Beispiele hierfür sind Alkylolamide, Aminoxide und Lecithine.

Ohne Anspruch auf Vollständigkeit seien aus den hier aufgezählten Stoffklassen die folgenden Vertreter benannt: Die (Oligo)-Alkoxylate von lipophile Reste enthaltenden Grundmolekülen können sich insbesondere von ausgewählten Vertretern aus den nachfolgenden Klassen der lipophile Reste enthaltenden Grundmoleküle ableiten: Fettalkohole, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Wie angegeben können die jeweiligen Umsetzungsprodukte auch wenigstens anteilsweise Endgruppen-verschlossen sein. Beispiele fiir Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen. Auf das umfangreiche Fachwissen kann hier verwiesen werden. Solche Partialester und/oder -ether können insbesondere auch Grundmoleküle fiir eine (Oligo)-Alkoxylierung sein.

Für die Abstimmung des jeweiligen Temperaturbereiches für die Phaseninversion in den erfindungsgemäßen Schmiermittelkonzentraten kann es ein wesentliches Bestimmungselement sein, die Emulgatoren/Emulgatorsysteme in ihrer Einsatzmenge im Mehrkomponentengemisch auf den hier vorliegenden Anteil an Ölphase mit Schmierwirkung abzustimmen. Bevorzugte Emulgatormengen liegen in dem Bereich gleich/größer 1 Gew.-%, vorzugsweise in dem Bereich von 5 bis 60 Gew.-% - bezogen jeweils auf die Ölphase mit Schmiermittelcharakter. Für das praktische Arbeiten haben sich die folgenden Mengenbereiche für die erfindungsgemäß eingesetzten Emulgatoren/Emulgatorsysteme- wiederum bezogen auf die Ölphase - als besonders geeignet erwiesen: 10 bis 50 Gew.-%, zweckmäßigerweise 15 bis 40 Gew.-% und insbesondere Mengen in dem Bereich von 20 bis 35 Gew.-%.

Als Schmiermittelkomponenten organischen Ursprungs kommt der breite Bereich organischer Verbindungen mit Schmierwirkung in Betracht der sowohl auf reiner Kohlenwasserstoftbasis aufgebaut sein kann als auch entsprechende Kohlenwasserstoffverbindungen mit flinktionellen Gruppen umfaßt, die beispielsweise die Oberflächenadhäsion oder andere bekannte Effekte auslösen, die für die Schmierung insbesondere unter den Bedingungen des Hochdrucks bekannt sind, wie sie auch im Rahmen des erfindungsgemäß betroffenen Arbeitsgebietes auftreten können.

Grundsätzlich kommen zunächst einmal als Schmiermittel O-Phasen in Betracht, die zum bevorzugt wenigstens überwiegenden Anteil den nachfolgenden Stoffklassen bzw. ihren Abmischungen zuzuordnen sind: Gesättigte Kohlenwasserstoffe (geradkettig, verzweigt und/oder cyclisch), olefinisch ungesättigte Kohlenwasserstoffe (geradkettig, verzweigt und/oder cyclisch), Fettalkohole (geradkettig und/oder verzweigt und dabei gesättigt und/oder olefinisch ungesättigt), Carbonsäureester, z. B. Triglyceride, Kohlensäureester, Polyester, Acetale, Ketone, (Poly)-Ether, Silikonöle, oder andere funktionalisierte Kohlenwasserstoffverbindungen wie (Oligo)-Amide, (Oligo)-Imide und/oder (Oligo)-Ketone.

Polyesteröle sind organische Komponenten die sich durch ausgeprägte Schmiermittelwirkung auszeichnen. Aus dem jüngeren druckschriftlichen Stand der Technik sei beispielsweise verwiesen auf die EP 0 713 909. Weitere Literaturstellen zu geeigneten Esterölen sind die Europäischen Patentschriften EP 0 374 671, EP 0 374 672, EP 0 386 638, EP 0 386 636 und EP 0 535 074.

Darüberhinausgehend wird auf das allgemeine Fachwissen zum Gebiet der Schmiermittel und verwandter Produkte verwiesen, s. hierzu beispielsweise die Literaturstelle "Ullmann's Encyclopedia of Industrial Chemistry", 5. Ausgabe, Volume A 15, und die hier auf den Seiten 423 bis 511 veröffentlichte Zusammenfassung "Lubricants and Related Products" Dieter Klamann, Hamburg, sowie die in diesem Zusammenhang zusätzlich zitierte Literatur. Beschrieben sind in dieser Darstellung des hier betroffenen Wertstoffgebietes sowohl bei Raumtemperatur fließfähige wie bei Raumtemperatur feste organische Komponenten mit Schmierstoffcharakter, die auch im erfindungsgemäßen Sinne bedeutungsvoll sein können.

Neben den Hauptkomponenten dieser die O-Phase bildenden Schmierstoffe sieht die Erfindung die Mitverwendung von Additiven zur Ausbildung besonderer Schmiereffekte vor, so wie es im einschlägigen Stand der Technik grundsätzlich bekannt ist.

So kann es im Rahmen der Erfindung zweckmäßig sein, die Schmierwirkung des Zusatzes auch unter Arbeitsbedingungen extremer Druckbelastung sicherzustellen und/oder zu verbessern. Der Stand der Technik kennt für diesen Bereich der Anwendungsbedingungen eine Mehrzahl von Zusatzstoffen - die sogenannten E-P-Additive (Extreme-Pressure-Additives) - die auch im hier betroffenen Arbeitsbereich wirksam die verbesserte Schmierung sicherstellen.

Zum druckschriftlichen Stand der Technik wird verwiesen auf "Ullmann's Encyclopedia of Industrial Chemistry", 5. Edition, Volume A 15, Kapitel "Lubricants and Related Products" mit den zugehörigen Unterkapitel 7.5 "Extreme-Pressure Additives" (a.a.O., Seiten 450/1). Als eine zusätzliche Offenbarung in diesem Zusammenhang wird verwiesen auf die zitierte Literaturstelle Unterkapitel 4.4 "Phosphoric Acid Esters" a.a.O., Seite 440/1.

Beschrieben sind hier fiir dieses Einsatzgebiet der E-P-Lubricants zahlreiche Vertreter aus einer Mehrzahl von Stoffklassen wenigstens überwiegend organischer Struktur. Insbesondere sind benannt: P-enthaltende organische Verbindungen, z.B. aromatische und/oder aliphatische Ester - einschließlich entsprechender Partialester - von Säuren des Phosphors und/oder deren Partialsalze, z.B. entsprechende Phosphate und/oder Phosphonate; geschwefelte organische Verbindungen, in denen insbesondere polysulfidische Brückenelemente unter Einsatzbedingungen zugänglichen Schwefel für eine Belegung/Abreaktion mit Metalloberflächen anbieten, z.B. geschwefelte Kohlenwasserstoffverbindungen, geschwefelte Esteröle, entsprechende Fettalkohole, Fettsäuren und dergleichen; organische Stickstoff-Verbindungen wie Nitroaromaten, Aminophenolderivate, Ester von Carbaminsäuren, Salze organischer Basen mit organischen Säuren und schließlich organische Halogenverbindungen.

Besonders wirkungsvoll sind dabei Mehrkomponenten-Additive, in denen zwei oder mehr der hier angezogenen Stoffklassen gemischt oder in der Molekülstruktur verbunden werden. In Betracht kommen hier insbesondere entsprechende Kombinationen von Schwefel, Phosphor und/oder Stickstoff enthaltenden Zusatzstoffen.

Bei der Mitverwendung solcher Hilfsstoffe insbesondere aus der Klasse der E-P-Additive werden diese den erfindungsgemäß zuvor definierten Zusatzstoffen bzw. Stoffmischungen mit Schmiermittelcharakter üblicherweise in untergeordneten Mengen zugesetzt.

Die parallele Schutzrechtsanmeldung der Anmelderin DE 196 47 598 ("Verwendung ausgewählter Fettalkohole und ihrer Abmischungen mit Carbonsäureestern als Schmiermittelkomponente in wasserbasierten Bohrspülsystemen zum Erdreichaufschluß") beschreibt die Verwendung geradkettiger und/oder verzweigter Fettalkohole mit wenigstens 12 C-Atomen im Molekül und ihrer Abmischungen mit Carbonsäureestern als Zusatz mit Schmiermittelwirkung in wasserbasierten Bohrspülsystemen für deren Einsatz beim Erdreichaufschluß durch Erbohrung. Besonders bevorzugt können dabei Fettalkohole des Bereichs von C₁₂₋₃₀ und insbesondere des Bereichs von C₁₂₋₂₄ sein. Besonders herausgestellt sind in diesem Zusammenhang olefinisch 1- und/oder mehrfach ungesättigte Fettalkohole des Bereichs C₁₆₋₂₄ und/oder Guerbetalkohole des Bereichs C₁₂₋₂₀. Bevorzugte Ester für den gemeinsamen Einsatz mit Alkoholen dieser Art sind entsprechende Ester 1- und/oder mehrwertiger Carbonsäuren mit 1- und/oder mehrwertigen Alkoholen, wobei entsprechende Ester von geradkettigen, gegebenenfalls olefinisch ungesättigten Monocarbonsäuren des Fettbereichs - insbesondere C₁₂₋₂₄ besonders bevorzugt sind. Schmiermittel im Sinne der Offenbarung dieses parallelen Schutzrechtes sind besonders geeignete Wertstoffe auch gerade fiir die Verwirklichung der erfindungsgemäßen Lehre. Darüberhinausgehend haben sich Destillationsrückstände aus der Gewinnung entsprechender Fettalkohole als eine hochwirksame Klasse von Schmierstoffen für wasserbasierte Bohrspülungen erwiesen. Diese Destillationsrückstände können dabei bei Raumtemperatur fest und/oder flüssig sein. Die erfindungsgemäße Lehre eröffnet jetzt den Zugang zu einer Angebotsform, wie sie bisher für die Praxis nicht zur Verfügung stand.

Durch Abmischen mit erfindungsgemäß ausgewählten Emulgatoren/Emulgatorsystemen und wäßriger Phase, Erhitzen auf Temperaturen gleich/größer PIT und Abkühlen auf Temperaturen unterhalb der PIT - gewünschtenfalls unter Energieeintrag z.B. durch Rühren - werden hier und in den anderen jeweils gewählten Rezepturen gem. der Erfindung die neuen Angebotsformen der Schmiermittelkonzentrate mit der angestrebten Fähigkeit zur unmittelbaren Homogenisierung in wasserbasierten Systemen zugänglich.

### Beispiele

Die nachfolgenden Beispiele beschreiben Schmiermittelkonzentrate im Sinne der erfindungsgemäßen Lehre.

Als Schmiermittelkomponenten werden dabei - jeweils in mengengleichen Mischungsverhältnissen - die folgenden Komponenten eingesetzt:

### OMC 586

Ölphase auf Basis eines Estergemisches aus im wesentlichen gesättigten Fettsäuren auf Basis Palmkern und 2-Ethylhexanol, das zum weitaus überwiegenden Teil auf C_{12/14}-Fettsäuren zurückgeht.

### HD-Ocenol 80/85

Olefinisch ungesättigter Fettalkohol natürlichen Ursprungs des weitaus überwiegenden Bereichs C_{16/18} ...; Hydroxylzahl 205 bis 215; Jodzahl 84 bis 89; Erstarrungsbereich 6 bis 14°C.

Als Emulgatorsystem wird ein Gemisch aus Hauptemulgator (Eumulgin HRE 40) und CoEmulgator (Monomuls 90-L-12) eingesetzt. Dabei gilt

### Eumulgin HRE 40

gehärtetes Rhizinusöl mit 40 EO.

### Monomuls 90-L-12

Glycerinmonolaurat.

Als wäßrige Phase wird in allen Fällen durch Ionenaustausch voll entsalztes Wasser eingesetzt. Die Herstellung der erfindungsgemäßen wasserbasierten PIT-Schmiermittelemulsionen erfolgt durch Aufheizen des jeweiligen wasserhaltigen Mehrkomponentengemisches unter Rühren auf eine Maximaltemperatur von 98,5°C und anschließendes Abkühlen unter Rühren auf Temperaturen im Bereich der Raumtemperatur.

Die meßtechnische Bestimmung der Mittelphase - PIT-Bereich mit jeweiliger Untergrenze und Obergrenze - erfolgt durch Bestimmung der elektrischen Leitfähigkeit im Verlauf des Aufheizens - PIT (aufwärts) - und im Verlauf des Abkühlens - PIT (abwärts). Zu Einzelheiten dieser Meßmethodik des Standes der Technik vgl. beispielsweise die Angaben der Druckschriften des Standes der Technik gem. EP 0 345 586 und EP 0 521 981.

In der nachfolgenden Tabelle sind zunächst die Mischungsverhältnisse der in den Beispielen 1 bis 3 jeweils eingesetzten Mehrstoffgemische zusammengestellt. Nachfolgend sind die zugehörigen Angaben zur Bestimmung der Temperaturgrenzen der Mittelphase - jeweils mit Untergrenze und zugehöriger Obergrenze in °C - aufgeführt. Dabei ergibt sich in den hier gegebenen Fällen weitgehende Übereinstimmung der jeweiligen PIT-Bereiche in den beiden Bestimmungsmethoden "aufwärts" und "abwärts".

Die Beschaffenheit und das Aussehen der auf Raumtemperatur abgekühlten Versuchsansätze ist schließlich als letzte Aussage dem jeweiligen Beispiel zugeordnet. In allen Fällen handelt es sich um wasserbasierte Emulsionen mit extrem fein verteilter Ölphase - Blaufärbung der wasserbasierten Emulsion.

### Pit-Schmiermittelemulsion (in Gew.-% AS)

| **Beispiele** | **1** | **2** | **3** |
|---|---|---|---|
| **OMC 586** | 22,5 | 25,0 | 25,0 |
| **HD-Ocenol 80/85** | 22,5 | 25,0 | 25,0 |
| **Eumulgin HRE 40** | 6,5 | 6,5 | 7,75 |
| **Monomuls 90-L-12** | 3,5 | 3,5 | 4,42 |
| **Wasser** | 45,0 | 40,0 | 38,0 |
| | | | |
| **PIT/°C (aufwärts)** | 75-89 | 88-94 | 67-85 |
| **PIT°C (abwärts)** | 80-89 | 88-94 | 71-85 |
| **Aussehen** | dünnflüssigb lau | dünnflüss. blau | fließfähig blau |

## Patentansprüche

1. Verwendung von mehrphasigen Schmiermittelkonzentraten, die bei Raumtemperatur flüssige und/oder feste organische Komponenten mit Schmiermittelwirkung (O-Phase) zusammen mit Emulgatoren fein-dispers verteilt in einer geschlossenen wäßrigen Phase (W-Phase) enthalten, wobei das System aus O-Phase/W-Phase und Emulgatoren eine Phaseninversionstemperatur (PIT) oberhalb der Raumtemperatur aufweist und durch Erhitzen des Mehrphasensystems auf Temperaturen gleich/oberhalb PIT und nachfolgendes Abkühlen auf Werte kleiner PIT hergestellt worden ist als Zusatz zu wasserbasierten Arbeitsflüssigkeiten aus dem Bereich des Erdreichaufschlusses durch Erbohrung und der weiterführenden Behandlung solcher Erdreichbohrungen.

2. Verwendung nach Anspruch 1, **dadurch gekennzeichnet, daß** mehrphasige Schmiermittelkonzentrate verwendet werden, bei denen die Untergrenze der PIT des Mehrphasensystems bei Temperaturen oberhalb 25 bis 30°C, vorzugsweise gleich/größer 40 bis 50°C und insbesondere gleich/größer 60°C, liegt.

3. Verwendung nach Ansprüchen 1 oder 2, **dadurch gekennzeichnet, daß** mehrphasige Schmiermittelkonzentrate verwendet werden, bei denen die Obergrenze der Phaseninversionstemperatur (PIT) des Mehrphasensystems bei höchstens 100°C, vorzugsweise gleich/kleiner 80 bis 90°C, liegt.

4. Verwendung nach Ansprüchen 1 bis 3, **dadurch gekennzeichnet, daß** mehrphasige Schmiermittelkonzentrate verwendet werden, bei denen die bei Raumtemperatur feste Anteile der O-Phase zum wenigstens überwiegenden Anteil bei Temperaturen gleich/größer PIT und insbesondere bei den maximalen Arbeitstemperaturen zur nachfolgenden Auslösung der Phaseninversion durch Abkühlen im fließfähigen Zustand vorliegen.

5. Verwendung nach Ansprüchen 1 bis 4, **dadurch gekennzeichnet, daß** mehrphasige Schmiermittelkonzentrate verwendet werden, bei denen die Mengenverhältnisse von W-Phase/O-Phase im Bereich von 10/90 bis 90/10, vorzugsweise im Bereich von 25/75 bis 80/20 und insbesondere im Bereich von 35/65 bis 60/40, liegen.

6. Verwendung nach Ansprüchen 1 bis 5, **dadurch gekennzeichnet, daß** mehrphasige Schmiermittelkonzentrate verwendet werden, deren Emulgatoren/Emulgatorsysteme wenigstens anteilsweise, vorzugsweise zum wenigstens überwiegenden Anteil, nichtionischer Struktur sind und/oder sowohl nichtionische Strukturelemente als auch anionische Strukturelemente in der Molekülgrundstruktur miteinander verbinden.

7. Verwendung nach Ansprüchen 1 bis 6, **dadurch gekennzeichnet, daß** mehrphasige Schmiermittelkonzentrate verwendet werden, bei denen mehrkomponentige Emulgatorsysteme insbesondere zur erleichterten Anpassung der PIT an den im praktischen Einsatz vorgegebenen Temperaturbereich der Phaseninversion vorliegen, wobei Abmischungen aus Emulgator-Hauptkomponenten mit vergleichsweise stärker ausgeprägter Hydrophilie und Co-Emulgatoren erhöhter Lipophilie bevorzugt sein können.

8. Verwendung nach Ansprüchen 1 bis 7, **dadurch gekennzeichnet, daß** mehrphasige Schmiermittelkonzentrate verwendet werden, bei denen Emulgator-Hauptkomponenten mit HLB-(number)Werten des HLB-Bereiches von 6 bis 20, vorzugsweise von 7 bis 18, vorliegen, die in einer bevorzugten Ausführungsform gemeinsam mit stärker lipophilen Co-Emulgatoren mit - bezogen auf die Emulgator-Hauptkomponente(n)- niedrigerem HLB-Wert zum Einsatz kommen.

9. Verwendung nach Ansprüchen 1 bis 8, **dadurch gekennzeichnet, daß** mehrphasige Schmiermittelkonzentrate verwendet werden, bei denen nichtionische Emulgatorkomponenten (Emulgator-Hauptkomponenten und/oder Co-Emulgatoren) Vertreter aus wenigstens einer der nachfolgenden Stoffklassen vorliegen:
(Oligo)-Alkoxylate - insbesondere Ethoxylate und/oder Propoxylate - von lipophile Reste enthaltenden und zur Alkoxylierung befähigten Grundmolekülen natürlichen und/oder synthetischen Ursprungs, wobei die Alkoxylate auch Endgruppenverschlossen sein können, Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen, Alkyl(poly)glykoside langkettiger Alkohole, Fettalkohole natürlichen und/oder synthetischen Ursprungs, Alkylolamide, Aminoxide und Lecithine.

10. Verwendung nach Ansprüchen 1 bis 9, **dadurch gekennzeichnet, daß** mehrphasige Schmiermittelkonzentrate verwendet werden, bei denen die Emulgatoren/Emulgatorsysteme in ihrer Einsatzmenge im Mehrkomponentengemisch auf den hier vorliegenden Anteil an O-Phase abgestimmt sind und dabei bevorzugt in Mengen gleich/größer 1 Gew.-%, vorzugsweise in Mengen von 5 bis 60 Gew.-% (bezogen jeweils auf O-Phase) vorliegen, wobei besonders bevorzugte Mengenbereiche für diese Emulgatoren - wiederum bezogen auf die O-Phase - wie folgt definiert sind: 10 bis 50 Gew.-%, 15 bis 40 Gew.-% und insbesondere 20 bis 35 Gew.-%.

11. Verwendung nach Ansprüchen 1 bis 10, **dadurch gekennzeichnet, daß** mehrphasige Schmiermittelkonzentrate verwendet werden, bei denen O-Phasen vorliegen, die zum bevorzugt wenigstens überwiegenden Anteil den nachfolgenden Stoffklassen bzw. ihren Abmischungen zuzuordnen sind:
Gesättigte Kohlenwasserstoffe (geradkettig, verzweigt und/oder cyclisch), olefinisch ungesättigte Kohlenwasserstoffe (geradkettig, verzweigt und/oder cyclisch), Fettalkohole (geradkettig und/oder verzweigt und dabei gesättigt und/oder olefinisch ungesättigt), Carbonsäureester, Kohlensäureester, Polyester, Acetale, Ketone, (Poly)-Ether, Silikonöle, (Oligo)-Amide, (Oligo)-Imide, (Oligo)-Ketone.

12. Verwendung nach Ansprüchen 1 bis 11, **dadurch gekennzeichnet, daß** mehrphasige Schmiermittelkonzentrate verwendet werden, bei denen als O-Phase wenigstens anteilsweise geradkettige und/oder verzweigte Fettalkohole mit wenigstens 12 C-Atomen im Molekül und ihre Abmischungen mit Carbonsäureestern, vorliegen.

13. Verwendung nach Ansprüchen 1 bis 12, **dadurch gekennzeichnet, daß** mehrphasige Schmiermittelkonzentrate verwendet werden, bei denen in der O-Phase Fettalkohole des Bereichs von C₁₂₋₃₀, vorzugsweise des Bereichs von C₁₂₋₂₄ und/oder Destillationsrückstände aus der Gewinnung entsprechender Fettalkohole vorliegen.

14. Verwendung nach Ansprüchen 1 bis 13, **dadurch gekennzeichnet, daß** mehrphasige Schmiermittelkonzentrate verwendet werden, die zusätzlich übliche Schmiermittel-Additive, insbesondere Additive fiir den Anwendungsbereich extremen Druckes - E-P-Additive - enthalten.

15. Verwendung nach Ansprüchen 1 bis 14, **dadurch gekennzeichnet, daß** die mehrphasigen Schmiermittelkonzentrate wasserbasierten Bohrspülungen und/oder Emulsions-Bohrspülungen vom O/W-Typ zugesetzt werden.

16. Verwendung nach Ansprüchen 1 bis 15, **dadurch gekennzeichnet, daß** die mehrphasigen Schmiermittelkonzentrate Arbeitsflüssigkeiten zugesetzt werden, deren Arbeitstemperatur vor Ort im Erdreichinneren oberhalb der PIT des Mehrphasensystems liegt.

17. Verwendung nach Ansprüchen 1 bis 16, **dadurch gekennzeichnet, daß** die mehrphasigen Schmiermittelkonzentrate wasserbasierten Silikatspülungen zugesetzt werden, wobei O-Phasen mit Schmierwirkung bevorzugt sein können, die wenigstens anteilsweise durch Fettalkohole und deren Abmischungen mit Carbonsäureestern und/oder Kohlensäureestern gebildet sind.

18. Mehrphasiges Schmiermittelkonzentrat mit verbesserten Eigenschaften für den Einsatz in wäßrigen Arbeitsflüssigkeiten aus dem Bereich des Erdreichaufschlusses durch Erbohrung, enthaltend bei Raumtemperatur flüssige und/oder feste organische Komponenten mit Schmiermittelwirkung (O-Phase) zusammen mit Emulgatoren fein-dispers verteilt in einer geschlossenen wäßrigen Phase (W-Phase), wobei das System aus O-Phase/W-Phase und Emulgatoren eine Phaseninversionstemperatur (PIT) oberhalb der Raumtemperatur aufweist und durch Erhitzen des Mehrphasensystems auf Temperaturen gleich/oberhalb PIT und nachfolgendes Abkühlen auf Werte kleiner PIT hergestellt worden ist, **dadurch gekennzeichnet, daß** das Konzentrat Additive für den Anwendungsbereich extremen Druckes - E-P-Additive - enthält.

19. Schmiermittelkonzentrat nach Anspruch 18, **dadurch gekennzeichnet, daß** die Untergrenze der PIT des Mehrphasensystems bei Temperaturen oberhalb 25 bis 30°C, vorzugsweise gleich/größer 40 bis 50°C und insbesondere gleich/größer 60°C, liegt.

20. Schmiermittelkonzentrat nach Ansprüchen 18 und 19, **dadurch gekennzeichnet, daß** die Obergrenze der Phaseninversionstemperatur (PIT) des Mehrphasensystems bei höchstens 100°C, vorzugsweise gleich/kleiner 80 bis 90°C, liegt.

21. Schmiermittelkonzentrat nach Ansprüchen 18 bis 20, **dadurch gekennzeichnet, daß** bei Raumtemperatur feste Anteile der O-Phase zum wenigstens überwiegenden Anteil bei Temperaturen gleich/größer PIT und insbesondere bei den maximalen Arbeitstemperaturen zur nachfolgenden Auslösung der Phaseninversion durch Abkühlen im fließfähigen Zustand vorliegen.

22. Schmiermittelkonzentrat nach Ansprüchen 18 bis 21, **dadurch gekennzeichnet, daß** die Mengenverhältnisse von W-Phase/O-Phase im Bereich von 10/90 bis 90/10, vorzugsweise im Bereich von 25/75 bis 80/20 und insbesondere im Bereich von 35/65 bis 60/40, liegen.

23. Schmiermittelkonzentrat nach Ansprüchen 18 bis 22, **dadurch gekennzeichnet, daß** seine Emulgatoren/Emulgatorsysteme wenigstens anteilsweise, vorzugsweise zum wenigstens überwiegenden Anteil, nichtionischer Struktur sind und/oder sowohl nichtionische Strukturelemente als auch anionische Strukturelemente in der Molekülgrundstruktur miteinander verbinden.

24. Schmiermittelkonzentrat nach Ansprüchen 18 bis 23, **dadurch gekennzeichnet, daß** mehrkomponentige Emulgatorsysteme insbesondere zur erleichterten Anpassung der PIT an den im praktischen Einsatz vorgegebenen Temperaturbereich der Phaseninversion vorliegen, wobei Abmischungen aus Emulgator-Hauptkomponenten mit vergleichsweise stärker ausgeprägter Hydrophilie und Co-Emulgatoren erhöhter Lipophilie bevorzugt sein können.

25. Schmiermittelkonzentrat nach Ansprüchen 18 bis 24, **dadurch gekennzeichnet, daß** Emulgator-Hauptkomponenten mit HLB-(number)Werten des HLB-Bereiches von 6 bis 20, vorzugsweise von 7 bis 18, vorliegen, die in einer bevorzugten Ausführungsform gemeinsam mit stärker lipophilen Co-Emulgatoren mit - bezogen auf die Emulgator-Hauptkomponente(n) - niedrigerem HLB-Wert zum Einsatz kommen.

26. Schmiermittelkonzentrat nach Ansprüchen 18 bis 25, **dadurch gekennzeichnet, daß** als nichtionische Emulgatorkomponenten (Emulgator-Hauptkomponenten und/oder Co-Emulgatoren) Vertreter aus wenigstens einer der nachfolgenden Stoffklassen vorliegen:
(Oligo)-Alkoxylate - insbesondere Ethoxylate und/oder Propoxylate - von lipophile Reste enthaltenden und zur Alkoxylierung befähigten Grundmolekülen natürlichen und/oder synthetischen Ursprungs, wobei die Alkoxylate auch Endgruppenverschlossen sein können, Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen, Alkyl(poly)glykoside langkettiger Alkohole, Fettalkohole natürlichen und/oder synthetischen Ursprungs, Alkylolamide, Aminoxide und Lecithine.

27. Schmiermittelkonzentrat nach Ansprüchen 18 bis 26, **dadurch gekennzeichnet, daß** die Emulgatoren/Emulgatorsysteme in ihrer Einsatzmenge im Mehrkomponentengemisch auf den hier vorliegenden Anteil an O-Phase abgestimmt sind und dabei bevorzugt in Mengen gleich/größer 1 Gew.-%, vorzugsweise in Mengen von 5 bis 60 Gew.-% (bezogen jeweils auf O-Phase) vorliegen, wobei besonders bevorzugte Mengenbereiche für diese Emulgatoren - wiederum bezogen auf die O-Phase - wie folgt definiert sind: 10 bis 50 Gew.-%, 15 bis 40 Gew.-% und insbesondere 20 bis 35 Gew.-%.

28. Schmiermittelkonzentrat nach Ansprüchen 18 bis 27, **dadurch gekennzeichnet, daß** als O-Phase wenigstens anteilsweise geradkettige und/oder verzweigte Fettalkohole mit wenigstens 12 C-Atomen im Molekül und ihre Abmischungen mit Carbonsäureestern, vorliegen.

29. Schmiermittelkonzentrat nach Ansprüchen 18 bis 28, **dadurch gekennzeichnet, daß** in der O-Phase Fettalkohole des Bereichs von C₁₂₋₃₀, vorzugsweise des Bereichs von C₁₂₋₂₄ und/oder Destillationsrückstände aus der Gewinnung entsprechender Fettalkohole vorliegen.

## Claims

1. The use of multiphase lubricant concentrates containing organic components with a lubricating effect which are liquid and/or solid at room temperature (O phase) together with emulsifiers finely dispersed in a continuous aqueous phase (W phase), the system of O phase/W phase and emulsifiers having a phase inversion temperature (PIT) above room temperature and having been produced by heating the multiphase system to temperatures equal to or above the PIT and subsequent cooling to temperatures below the PIT, as an additive in water-based fluids for geological exploration by drilling and for the subsequent treatment of the resulting boreholes.

2. The use claimed in claim 1, **characterized in that** multiphase lubricant concentrates in which the lower limit of the PIT of the multiphase system is at temperatures above 25 to 30°C, preferably at temperatures of 40 to 50°C or higher and more preferably at temperatures of 60°C or higher are used.

3. The use claimed in claim 1 or 2, **characterized in that** multiphase lubricant concentrates in which the upper limit of the phase inversion temperature (PIT) of the multiphase system is at most 100°C and preferably 80 to 90°C or higher are used.

4. The use claimed in claims 1 to 3, **characterized in that** multiphase lubricant concentrates are used in which the components of the O phase solid at room temperature are at least predominantly present in liquid form at temperatures equal to or above the PIT and, in particular, at the maximum working temperatures for subsequent initiation of phase inversion by cooling are used.

5. The use claimed in claims 1 to 4, **characterized in that** multiphase lubricant concentrates in which the quantity ratio of W phase to O phase is in the range from 10:90 to 90:10, preferably in the range from 25:75 to 80:20 and more preferably in the range from 35:65 to 60:40 are used.

6. The use claimed in claims 1 to 5, **characterized in that** multiphase lubricant concentrates of which the emulsifiers/emulsifier systems are at least partly and preferably at least predominantly nonionic and/or combine both nonionic structural elements and anionic structural elements with one another in the basic molecular structure are used.

7. The use claimed in claims 1 to 6, **characterized in that** multiphase lubricant concentrates are used in which multicomponent emulsifier systems are present in particular to make the PIT easier to adapt to the predetermined phase inversion temperature range, mixtures of far more hydrophilic than lipophilic emulsifiers with more lipophilic than hydrophilic co-emulsifiers being preferred.

8. The use claimed in claims 1 to 7, **characterized in that** multiphase lubricant concentrates are used in which principal emulsifier components with HLB values of 6 to 20 and preferably 7 to 18 are present and, in one preferred embodiment, are used together with more lipophilic than hydrophilic co-emulsifiers having a lower HLB value than the principal emulsifier component(s).

9. The use claimed in claims 1 to 8, **characterized in that** multiphase lubricant concentrates are used in which the nonionic emulsifier components (principal emulsifier components and/or co-emulsifiers) present are representatives of at least one of the following classes of compounds: (oligo) alkoxylates, more particularly ethoxylates and/or propoxylates, of basic molecules of natural and/or synthetic origin which contain lipophilic groups and are capable of alkoxylation, the alkoxylates optionally being end-capped, partial esters and/or partial ethers of polyhydric alcohols containing in particular 2 to 6 carbon atoms and 2 to 6 OH groups and/or oligomers thereof with acids and/or alcohols containing lipophilic groups, alkyl (poly)glycosides of long-chain alcohols, fatty alcohols of natural and/or synthetic origin, alkylolamides, amine oxides and lecithins.

10. The use claimed in claims 1 to 9, **characterized in that** multiphase lubricant concentrates are used in which the quantity of emulsifiers/emulsifier systems used in the multicomponent mixture is adapted to the percentage content of O phase present therein and preferably amounts to 1% by weight or more and more preferably to 5 to 60% by weight (based on O phase), particularly preferred quantity ranges for the emulsifiers (again based on the O phase) being 10 to 50% by weight, 15 to 40% by weight and more particularly 20 to 35% by weight.

11. The use claimed in claims 1 to 10, **characterized in that** multiphase lubricant concentrates are used in which the O phases present may be I assigned, preferably at least predominantly, to the following classes of compounds or mixtures thereof: saturated hydrocarbons (linear, branched and/or cyclic), olefinically unsaturated hydrocarbons (linear, branched and/or cyclic), fatty alcohols (linear and/or branched and saturated and/or olefinically unsaturated), carboxylic acid esters, carbonic acid esters, polyesters, acetals, ketones, (poly)ethers, silicone oils, (oligo)amides, (oligo)imides, (oligo)ketones.

12. The use claimed in claims 1 to 11, **characterized in that** multiphase lubricant concentrates are used in which linear and/or branched fatty alcohols containing at least 12 carbon atoms in the molecule and mixtures thereof with carboxylic acid esters are at least partly present as the O phase.

13. The use claimed in claims 1 to 12, **characterized in that** multiphase lubricant concentrates are used in which C₁₂₋₃₀ fatty alcohols, preferably C₁₂₋₂₄ fatty alcohols, and/or distillation residues from the production of corresponding fatty alcohols are present in the O phase.

14. The use claimed in claims 1 to 13, **characterized in that** multiphase lubricant concentrates additionally containing standard lubricant additives, more particularly extreme-pressure additives, are used.

15. The use claimed in claims 1 to 14, **characterized in that** the multiphase lubricant concentrates are added to water-based drilling fluids and/or emulsion drilling fluids of the o/w type.

16. The use claimed in claims 1 to 15, **characterized in that** the multiphase lubricant concentrates are added to working fluids of which the working temperature in situ in rock is above the PIT of the multiphase system.

17. The use claimed in claims 1 to 16, **characterized in that** the multiphase lubricant concentrates are added to water-based silicate drilling fluids, lubricating O phases formed at least partly by fatty alcohols and mixtures thereof with carboxylic acid esters and/or carbonic acid esters being preferred.

18. A multiphase lubricant concentrate having improved properties for use in water-based fluids for geological exploration by drilling, containing organic components with a lubricating effect which are liquid and/or solid at room temperature (O phase) together with emulsifiers finely dispersed in a continuous aqueous phase (W phase), the system of O phase/W phase and emulsifiers having a phase inversion temperature (PIT) above room temperature and having been produced by heating the multiphase system to temperatures equal to or above the PIT and subsequent cooling to temperatures below the PIT, **characterized in that** the concentrate contains extreme-pressure additives.

19. A lubricant concentrate as claimed in claim 18, **characterized in that** the lower limit of the PIT of the multiphase system is at temperatures above 25 to 30°C, preferably at temperatures of 40 to 50°C or higher and more preferably at temperatures of 60°C or higher.

20. A lubricant concentrate as claimed in claims 18 and 19, **characterized in that** the upper limit of the phase inversion temperature (PIT) of the multiphase system is at most 100°C and preferably 80 to 90°C or higher.

21. A lubricant concentrate as claimed in claims 18 to 20, **characterized in that** components of the O phase solid at room temperature are at least predominantly present in liquid form at temperatures equal to or above the PIT and, in particular, at the maximum working temperatures for subsequent initiation of phase inversion by cooling.

22. A lubricant concentrate as claimed in claims 18 to 21, **characterized in that** the quantity ratio of W phase to O phase is in the range from 10:90 to 90:10, preferably in the range from 25:75 to 80:20 and more preferably in the range from 35:65 to 60:40.

23. A lubricant concentrate as claimed in claims 18 to 22, **characterized in that** its emulsifiers/emulsifier systems are at least partly and preferably at least predominantly nonionic and/or combine both nonionic structural elements and anionic structural elements with one another in the basic molecular structure.

24. A lubricant concentrate as claimed in claims 18 to 23, **characterized in that** multicomponent emulsifier systems are present in particular to make the PIT easier to adapt to the predetermined phase inversion temperature range, mixtures of far more hydrophilic than lipophilic principal emulsifier components with more lipophilic than hydrophilic co-emulsifiers being preferred.

25. A lubricant concentrate as claimed in claims 18 to 24, **characterized in that** principal emulsifier components with HLB values of 6 to 20 and preferably 7 to 18 are present and, in one preferred embodiment, are used together with more lipophilic than hydrophilic co-emulsifiers having a lower HLB value than the principal emulsifier component(s).

26. A lubricant concentrate as claimed in claims 18 to 25, **characterized in that** the nonionic emulsifier components (principal emulsifier components and/or co-emulsifiers) used are representatives of at least one of the following classes of compounds:
(oligo) alkoxylates, more particularly ethoxylates and/or propoxylates, of basic molecules of natural and/or synthetic origin which contain lipophilic groups and are capable of alkoxylation, the alkoxylates optionally being end-capped, partial esters and/or partial ethers of polyhydric alcohols containing in particular 2 to 6 carbon atoms and 2 to 6 OH groups and/or oligomers thereof with acids and/or alcohols containing lipophilic groups, alkyl (poly)glycosides of long-chain alcohols, fatty alcohols of natural and/or synthetic origin, alkylolamides, amine oxides and lecithins.

27. A lubricant concentrate as claimed in claims 18 to 26, **characterized in that** the quantity of emulsifiers/emulsifier systems used in the multicomponent mixture is adapted to the percentage content of O phase present therein and preferably amounts to 1% by weight or more and more preferably to 5 to 60% by weight (based on O phase), particularly preferred quantity ranges for the emulsifiers (again based on the O phase) being 10 to 50% by weight, 15 to 40% by weight and more particularly 20 to 35% by weight.

28. A lubricant concentrate as claimed in claims 18 to 27, **characterized in that** linear and/or branched fatty alcohols containing at least 12 carbon atoms in the molecule and mixtures thereof with carboxylic acid esters are at least partly present as the O phase.

29. A lubricant concentrate as claimed in claims 18 to 28, **characterized in that** C₁₂₋₃₀ fatty alcohols, preferably C₁₂₋₂₄ fatty alcohols, and/or distillation residues from the production of corresponding fatty alcohols are present in the O phase.

## Revendications

1. Utilisation de concentrés de lubrifiants à plusieurs phases, qui contiennent à la température ambiante des composants organiques liquides et/ou solides ayant une action de lubrification (phase H) avec des émulsifiants répartis sous forme finement dispersée dans une phase aqueuse continue (phase E), le système constitué de la phase H/phase E et d'émulsifiants présentant une température d'inversion de phases (TIP) supérieure à la température ambiante et étant produit par chauffage du système à plusieurs phases à des températures égales ou supérieures à la TIP puis par refroidissement à des valeurs inférieures à la TIP, comme additif à des liquides de travail à base aqueuse du domaine de l'exploitation minière par forage et du traitement ultérieur de tels forages miniers.

2. Utilisation selon la revendication 1,
**caractérisé en ce qu'**
on utilise des concentrés lubrifiants à plusieurs phases dans lesquels la limite inférieur de la TIP à plusieurs phases se situe à des températures supérieures à 25 à 30°C, de préférence égales ou supérieures à 40 à 50°C et en particulier égales ou supérieures à 60°C.

3. Utilisation selon les revendications 1 ou 2,
**caractérisée en ce qu'**
on utilise des concentrés lubrifiants à plusieurs phases dans lesquels la limite supérieure de la température d'inversion de phase (TIP) du système à plusieurs phases se situe à au plus 100°C, de préférence à un niveau égal ou inférieur à 80 à 90°C.

4. Utilisation selon les revendications 1 à 3,
**caractérisée en ce qu'**
on utilise des concentrés lubrifiants à plusieurs phases dans lesquels les fractions solides à la température ambiante de la phase H se présentent pour une part au moins prédominante à des températures égales ou supérieures à la TIP et en particulier aux températures de travail maximales pour le déclenchement ultérieur de l'inversion de phases par refroidissement, à l'état fluide.

5. Utilisation selon les revendications 1 à 4,
**caractérisée en ce qu'**
on utilise des concentrés lubrifiants à plusieurs phases dans lesquels les rapports quantitatifs phase E/phase H se situe dans un intervalle de 10/90 à 90/10, de préférence dans un intervalle allant de 25/75 à 80/20 et en particulier dans un intervalle de 35/65 à 60/40.

6. Utilisation selon les revendications 1 à 5,
**caractérisée en ce qu'**
on utilise des concentrés lubrifiants à plusieurs phases dont les émulsifiants/systèmes émulsifiants sont au moins pour une part, de préférence au moins pour une part prédominante, de structure non ionique, et/ou relient entre eux des éléments de structure non ionique que des éléments de structure anionique dans la structure de base de la molécule.

7. Utilisation selon les revendications 1 à 6,
**caractérisée en ce qu'**
on utilise des concentrés lubrifiants à plusicurs phases dans lesquels les systèmes émulsifiants à plusieurs phases se présentent en particulier pour faciliter l'adaptation de la TIP à l'intervalle de température de l'invcrsion de phase donné à l'avance dans l'utilisation pratique, où l'on préfère des mélanges constitués d'un composant principal émulsifiant à hydrophilie comparativement plus fortement prononcée et de coémulsifiants de lipophilie accrue.

8. Utilisation selon les revendications 1 à 9,
**caractérisée en ce qu'**
on utilise des concentrés lubrifiants à plusieurs phases dans lesquels les composants principaux émulsifiant se présentent avec des valeurs d'EHL d'un intervalle allant de 6 à 20, de préférence de 6 à 18, que l'on utilise dans un mode de réalisation préféré en commun avec des coémulsifiants plus fortement lipophiles ayant - par rapport au(x) composant(s) principal(aux) émulsifiants - des valeurs d'EHL plus basses.

9. Utilisation selon les revendications 1 à 8,
**caractérisée en ce qu'**
on utilise des concentrés lubrifiants à plusieurs phases dans lesquels les composants émulsifiants non ioniques (composants principaux émulsifiants et/ou coémulsifiants) sont des représentants d'une des classes de produits suivante :
(oligo)-alcoxylates, en particulier propoxylates et/ou propoxylates - de molécules de base d'origine naturelle et/ou synthétique contenant des radicaux lipophiles aptes à l'alcoxylation, où les alcoxylates peuvent également être à extrémité bloquée, esters partiels et/ou éthers partiels d'alcools polyfonctionnels comportant en particulier de 2 à 6 atomes de carbone et de 2 à 6 groupes OH et/ou leurs oligomères avec des acides ou alcools contenant des radicaux lipophiles, alkyl(poly)glycosides d'alcools à longues chaînes, alcools gras d'origine naturelle et/ou synthétique, alkylolamides, aminoxydes, et lécithines.

10. Utilisation selon les revendications 1 à 9,
**caractérisée en ce qu'**
on utilise des concentrés lubrifiants à plusieurs phases dans lesquels les émulsifiants/systèmes émulsifiants sont déterminés dans les quantités employées dans les mélanges à plusieurs composants par rapport à la proportion de phase H ici présente, et de préférence à des quantités égales ou supérieures à 1 % en poids, de préférence à des quantités de 5 à 60 % en poids (toujours par rapport à la phase H), où les intervalles quantitatifs particulièrement préférés pour ces émulsifiants - là encore par rapport à la phase H - sont définis comme suit : 10 à 50 % en poids, 15 à 40 % en poids et en particulier 20 à 35 % en poids.

11. Utilisation selon les revendications 1 à 10,
**caractérisée en ce qu'**
on utilise des concentrés lubrifiants à plusieurs phases dans lesquels on a des phases H qui se répartissent, au moins pour une partie prédominante, parmi les classes de produits suivantes ou selon les cas leurs mélanges :
hydrocarbures saturés (à chaîne droite, ramifiés et/ou cycliques), hydrocarbures oléfiniquement insaturés (à chaîne droite, ramifiée et/ou cyclique), alcools gras (à chaîne droite et/ou ramifiée si saturée et/ou oléfiniquement insaturée), esters d'acide carboxylique, esters de l'acide carbonique, polyesters, acétals, cétones, (poly)éthers, huiles de silicones, (oligo)-amides, (oligo)-imides, (oligo)-cétones.

12. Utilisation selon les revendications 1 à 11,
**caractérisée en ce qu'**
on utilise des concentrés lubrifiants à plusieurs phases dans lesquels on trouve comme phase H des alcools gras au moins partiellement saturés et/ou ramifiés comportant au moins 12 atomes de carbone dans la molécule et leurs mélanges avec des éthers d'acides carboxyliques.

13. Utilisation selon les revendications 1 à 12,
**caractérisée en ce qu'**
on utilise des concentrés lubrifiants à plusieurs phases dans lesquels on a dans la phase H des alcools gras d'un intervalle allant de C₁₂ à C₃₀, de préférence d'un intervalle allant de C₁₂ à C₂₄ et/ou des résidus de distillation provenant de l'obtention d'alcools gras correspondants.

14. Utilisation selon les revendications 1 à 13,
**caractérisée en ce qu'**
on utilise des concentrés lubrifiants à plusieurs phases qui contiennent en outre des additifs lubrifiants habituels, en particulier des additifs pour le domaine d'application d'extrême pression - additifs EP.

15. Utilisation selon les revendications 1 à 14,
**caractérisée en ce qu'**
on ajoute aux concentrés lubrifiants à plusieurs phases des liquides de balayage pour forage à base aqueuse et/ou des liquides de balayage pour forage en émulsion de type H/E.

16. Utilisation selon les revendications 1 à 15,
**caractérisée en ce qu'**
on ajoute les concentrés de lubrifiants à plusieurs phases à des liquides de travail dont la température de travail dans la roche à l'intérieur du sol se situe au-dessus de la TIP du système à plusieurs phases.

17. Utilisation selon les revendications 1 à 6,
**caractérisée en ce qu'**
on ajoute les concentrés lubrifiants à plusieurs phases à des liquides de rinçage silicatés à base aqueuse, où l'on peut préférer des phases H à action lubrifiante qui sont formés au moins en partie par des alcools gras et leurs mélanges avec des esters de l'acide carboxylique et/ou des esters de l'acide carbonique.

18. Concentré lubrifiant à plusieurs phases ayant des propriétés améliorées pour utilisation dans des liquides de travail aqueux dans le domaine de l'extraction minière par forage, contenant des composants organiques liquides et/ou solides à la température ambiante ayant un effet lubrifiant (H) avec des émulsifiants répartis de façon finement dispersés dans une phase aqueuse continue (phase E), le système étant constitué d'une phase H/phase E et d'émulsifiants présentant une température d'inversion de phase (TIP) supérieure à la température ambiante, et étant produit par chauffage du système à plusieurs phases à des températures égales ou supérieures à la TIP puis par refroidissement à des valeurs inférieures à la TIP,
**caractérisé en ce que**
le concentré contient des additifs pour le domaine d'application d'extrême pression - additifs E-P.

19. Concentré lubrifiant selon la revendication 18,
caraetérisé en ce que
la limite inférieure de la TIP à plusieurs phases se situe à des températures supérieures à 25 à 30°C, de préférence à un niveau égal ou supérieur à 40 à 50°C en particulier égal ou supérieur à 60°C.

20. Concentré lubrifiant selon les revendications 18 et 19,
**caractérisé en ce que**
la limite supérieure de la température d'inversion de phases (TIP) du système à plusieurs phases se situe à au plus 100°C, de préférence à un niveau égal ou inférieur à 80 à 90°.

21. Concentré lubrifiant selon les revendications 18 à 20,
**caractérisé en ce qu'**
à la température ambiante les fractions solides de la phase H se présentent, pour une partie au moins prédominante, à des températures égales ou supérieures à la TIP, et en particulier aux températures de travail maximales pour le déclenchement ultérieur de l'inversion de phases par refroidissement.

22. Concentré lubrifiant selon les revendications 18 à 21,
**caractérisé en ce que**
les rapports quantitatifs de la phase E à la phase H se situent dans un intervalle 10/90 à 90/10, de préférence dans un intervalle de 25/75 à 80/20 et en particulier dans un intervalle allant de 35/65 à 60/40.

23. Concentré lubrifiant selon les revendications 18 à 22,
**caractérisé en ce que**
ces émulsifiants/systèmes émulsifiants sont au moins pour une part, de préférence au moins pour une partie prédominante, de structure non ionique, et/ou relient entre eux aussi bien des éléments de structure non ioniques que des éléments de structure anioniques dans la structure de base de la molécule.

24. Concentré lubrifiant selon les revendications 18 à 23,
**caractérisé en ce qu'**
on a des systèmes émulsifiants à plusieurs composants, en particulier pour faciliter l'adaptation de la TIP à l'intervalle de température d'inversion de phases donné au préalable dans l'utilisation pratique, où on peut préférer des mélanges d'émulsifiants-composants principal ayant une hydrophilie comparativement plus fortement prononcée et des coémulsifiants à lipophilie accrue.

25. Concentré lubrifiant selon les revendications 18 à 24,
**caractérisé en ce que**
l'on a des composants principaux émulsifiants à valeurs d'EHL situés dans un intervalle allant de 6 à 20, de préférence de 7 à 18, que l'on emploie, dans un mode de réalisation préféré, en même temps que les coémulsifiants plus fortement lipophiles, à valeur d'EHL plus faible - par rapport aux composants principaux d'émulsifiants.

26. Concentré lubrifiant selon les revendications 18 à 25,
**caractérisé en ce que**
l'on a comme composants émulsifiants non ioniques (composant principal émulsifiant et/ou co-émulsifiant) des représentants d'au moins l'une des classes suivantes :
(oligo)-alcoxylates, en particulier propoxylates et/ou propoxylates - de molécules de base d'origine naturelle et/ou synthétique contenant des radicaux lipophiles et aptes à l'alcoxylation, où les alcoxylates peuvent également être à extrémité bloquée, esters partiels et/ou éthers partiels d'alcools polyfonctionnels comportant en particulier de 2 à 6 atomes de carbone et de 2 à 6 groupes OH et/ou leurs oligomères avec des acides ou alcools contenant des radicaux lipophiles, alkyl(poly)glycosides d'alcools à longues chaînes, des alcools gras d'origine naturelle et/ou synthétique, des alkylolamides, des aminoxydes, et des lécithines.

27. Concentré lubrifiant selon les revendications 18 à 26,
**caractérisée en ce que**
les émulsifiants/systèmes émulsifiants sont déterminés dans les quantités employées dans les mélanges à plusieurs composants par rapport à la proportion de phases H ici présente, et de préférence à des quantités égales ou supérieures à 1 % en poids, de préférence à des quantités de 5 à 60 % en poids (toujours par rapport à la phase H), où les intervalles quantitatifs particulièrement préférés pour ces émulsifiants - là encore par rapport à la phase H - sont définis comme suit : 10 à 50 % en poids, 15 à 40 % en poids et en particulier 20 à 35 % en poids.

28. Concentré lubrifiant selon l'une des revendications 18 à 27,
**caractérisé en ce que**
l'on a comme phase H des alcools gras au moins partiellement à chaîne droite et/ou ramifiés comportant au moins 12 atomes de carbone dans la molécule et leurs mélanges dans des esters d'alkyle carboxylique.

29. Concentré lubrifiant selon les revendications 18 à 28,
**caractérisé en ce que**
l'on a dans la phase H des alcools gras d'un intervalle allant de C₁₂ à C₃₀, de préférence d'un intervalle allant de C₁₂ à C₂₄ et/ou des résidus de distillation provenant de l'obtention d'alcools gras correspondants.
